# EUROPEAN PATENT APPLICATION

(11) **EP 4 835 311 A1**
(43) Date of publication of application: **04.11.2026**
(21) Application number: 24926541.4
(22) Date of filing: 12.04.2024
(51) Int. Cl.: F16B 39/28, F16B 39/04, F16B 35/04, H01M 50/264

(54) **MOUNTING STRUCTURE, BATTERY, AND ELECTRIC DEVICE**

(30) Priority: 26.02.2024 CN 202420346857 U
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN)
(74) Representative: Lorenz Seidler Gossel Part. mbB
(86) International application number: PCT/CN2024/087539
(87) International publication number: WO 2025/179669

(57) **Abstract**

Provided are a mounting structure, a battery, and an electric device. The mounting structure (300) comprises a lock sleeve (35), a mounting screw (31), a tightening screw (36), and a mounting cap (32). The lock sleeve is provided with a containing cavity (350) passing through the lock sleeve in the axial direction; the mounting screw has a first end (311) and a second end (312) that are opposite to each other, the second end is arranged in the containing cavity, and the first end extends out of the lock sleeve; the tightening screw has an internal threaded section (361) threadedly connected to the second end; the mounting cap is provided with a connecting hole (321) for adapted connection of the first end of the mounting screw. In the mounting structure, the diameter of the second end of the mounting screw can be set to be relatively large, so as to increase the strength of the fitting position between the second end of the mounting screw and the tightening screw.

## Description

The present application claims priority to the Chinese patent application No. 202420346857.8, filed with the China National Intellectual Property Administration on February 26, 2024 and entitled "MOUNTING STRUCTURE, BATTERY, AND ELECTRIC DEVICE", which is incorporated herein by reference in its entirety.

### TECHNICAL FIELD

The present application pertains to the field of battery technologies, and more specifically, relates to a mounting structure, a battery, and an electric device.

### BACKGROUND

The statements herein merely provide background information related to the present application and do not necessarily constitute prior art. Electric vehicles may implement quick battery swapping by providing a mounting lock on the battery. One type of mounting lock uses a mounting screw having a mounting cap at the top to achieve quick engagement with a vehicle frame. In such a structure, the lower end of the mounting screw needs to be formed relatively thin, so that it can be inserted from the top into a lock sleeve of the mounting lock and connected to an internally threaded section of a tightening screw, and the tightening screw is used to pull and drive the mounting screw to rotate. However, since the tightening screw needs to frequently rotate relative to the lower end of the mounting screw, this results in relatively low strength at the mating position between the lower end of the mounting screw and the tightening screw, which affects the service life of the mounting lock.

### SUMMARY

The purpose of the embodiments of the present application is to provide a mounting structure, a battery, and an electric device to address the problem of low structural strength at the lower end of the mounting screw of the mounting lock in the related art.

According to a first aspect, an embodiment of the present application provides a mounting structure, including:
a lock sleeve, where the lock sleeve is provided with a cavity, and the cavity extends through two opposite ends of the lock sleeve along an axial direction of the lock sleeve;
a mounting screw, having a first end and a second end that are opposite to each other, where the second end is disposed in the cavity, and the first end extends out of the lock sleeve;
a tightening screw, disposed in the lock sleeve, where the tightening screw is provided with an internally threaded section, and the internally threaded section is threadedly connected to the second end; and
a mounting cap, where the mounting cap is provided with a connection hole adaptively connected to the first end of the mounting screw.

In the technical solution of this embodiment of the present application, by providing the mounting screw and the mounting cap, and providing a connection hole in the mounting cap for connection with the first end of the mounting screw, during assembly, the first end of the mounting screw can be inserted from one end of the lock sleeve and then extended out from the other end. In this way, the diameter of the second end of the mounting screw can be set relatively large to improve the structural strength of the second end of the mounting screw, thereby improving the strength at the mating position between the second end of the mounting screw and the tightening screw.

In some embodiments, the mounting structure further includes a locking member for locking the mounting cap to the first end, and the first end is provided with an adaptation structure that cooperates with the locking member to lock the mounting cap.

The locking member and the adaptation structure are provided to lock the mounting cap to the first end of the mounting screw, so that the mounting cap is firmly connected to the mounting screw, reducing the risk of the mounting cap moving axially along the mounting screw.

In some embodiments, the first end includes an externally threaded section, and the connection hole is provided with an internal thread for threaded connection with the externally threaded section. The locking member includes a locking block connected to the mounting cap, the locking block is provided with an opening for inserting the first end, the adaptation structure includes a stop portion provided on a side surface of the first end, and an inner surface of the opening is provided with a mating portion. The stop portion is adapted to the mating portion to restrict rotation of the locking block around the mounting screw.

The externally threaded section and the internal thread are provided to enable the mounting cap to be threadedly mounted on the first end of the mounting screw, thereby facilitating connection. The mating portion is provided in the opening of the locking block, and the stop portion is provided on the side surface of the first end. The stop portion cooperates with the mating portion to restrict rotation of the locking block around the mounting screw. Since the locking block is connected to the mounting cap, rotation of the mounting cap on the externally threaded section can also be restricted, thereby reducing, to a certain extent, the risk of loosening of the mounting cap.

In some embodiments, the stop portion includes a first flat surface, and the mating portion includes a second flat surface adapted to fit with the stop portion;
and/or, the stop portion includes a first curved surface, the first curved surface is eccentrically arranged with respect to the axial direction of the mounting screw, and the mating portion includes a second curved surface adapted to fit with the stop portion;
and/or, the stop portion includes a protrusion, and the mating portion includes a slot for insertion of the protrusion, the slot being arranged to extend axially along the mounting screw;
and/or, the stop portion includes a groove arranged to extend axially along the mounting screw, and the mating portion includes a protruding block adapted to insert into the groove.

The stop portion and the mating portion both are provided with a flat surface, and when the two flat surfaces abut against each other, rotation of the locking block around the mounting screw can be restricted, thereby restricting rotation of the mounting cap on the externally threaded section and, to a certain extent, reducing the risk of loosening of the mounting cap.

An eccentric first curved surface is provided on the mounting screw, and the mating portion is provided with a second curved surface cooperating with the first curved surface of the stop portion, which can also restrict rotation of the locking block around the mounting screw, thereby restricting rotation of the mounting cap on the externally threaded section and, to a certain extent, reducing the risk of loosening of the mounting cap.

The stop portion includes a protrusion, and the mating portion includes a slot. Through the mating insertion between the protrusion and the slot, rotation of the locking block around the mounting screw is restricted, thereby restricting rotation of the mounting cap on the externally threaded section and, to a certain extent, reducing the risk of loosening of the mounting cap.

The stop portion includes a groove, and the mating portion includes a protruding block. Through the mating insertion between the protruding block and the groove, rotation of the locking block around the mounting screw is restricted, thereby restricting rotation of the mounting cap on the externally threaded section and, to a certain extent, reducing the risk of loosening of the mounting cap.

In some embodiments, the stop portion is provided at an end of the externally threaded section away from the second end, and a radius of the externally threaded section is greater than or equal to a maximum distance from a side surface of the stop portion to the central axis of the mounting screw.

The stop portion is provided at the end of the externally threaded section away from the second end to facilitate processing and manufacturing of the stop portion. Since the internal thread of the connection hole of the mounting cap is adaptively connected to the externally threaded section, an inner diameter of the connection hole is equal to or close to the radius of the externally threaded section. By setting a radius of the externally threaded section greater than or equal to a maximum distance from the side surface of the stop portion to the central axis of the mounting screw, the stop portion can pass through the connection hole, so that the internal thread can be connected to the externally threaded section, thereby mounting the mounting cap on the mounting screw.

In some embodiments, the stop portion is provided at an end of the externally threaded section close to the second end, and the radius of the externally threaded section is less than or equal to a minimum distance from the side surface of the stop portion to the central axis of the mounting screw.

When the stop portion is provided at the end of the externally threaded section close to the second end, during mounting use, the locking block can be brought into contact with the load-bearing medium, which can protect the mounting cap. Since the locking block is located at a position corresponding to the stop portion, the opening on the locking block needs to be adapted to be fitted at a position on the mounting screw corresponding to the stop portion. Therefore, the radius of the externally threaded section is set to be less than or equal to the minimum distance from the side surface of the stop portion to the central axis of the mounting screw, to facilitate the externally threaded section passing through the opening, allowing the opening to reach the stop portion, thereby mounting the locking block on the mounting screw and connecting the mating portion to the stop portion.

In some embodiments, the opening is in interference fit with a region of the mounting screw corresponding to the stop portion; and/or, the inner surface of the opening is adhesively connected to the region of the mounting screw corresponding to the stop portion.

The inner surface of the opening is in interference fit or adhesively connected to the region of the mounting screw corresponding to the stop portion, to fix the locking block to the mounting screw, which, to a certain extent, can provide a good anti-loosening effect for the locking block, thereby providing a good anti-loosening effect for the mounting cap.

In some embodiments, one of the locking block and the mounting cap is provided with a recess, and the other of the locking block and the mounting cap is provided with an insertion protrusion adapted to insert into the recess.

The locking block is connected to the mounting cap through the cooperation between the recess and the insertion protrusion in an insertion manner, then rotation of the mounting cap necessarily drives the locking block to rotate, and by restricting rotation of the locking block on the mounting screw, rotation of the mounting cap on the mounting screw can be restricted, thereby providing an anti-loosening effect for the mounting cap.

In some embodiments, the mounting structure further includes a snap ring provided on the mounting screw, the snap ring being configured to restrict the locking block from moving in a direction away from the mounting cap.

By providing the snap ring, an axial position of the locking block along the mounting screw can be restricted by the cooperation between the mounting cap and the snap ring, thereby positioning and fixing the locking block, so that the locking block can better lock the mounting screw and provide an anti-loosening effect for the mounting cap.

In some embodiments, the mounting screw is provided with an annular groove, and the snap ring is engaged in the annular groove.

The annular groove is provided on the mounting screw to facilitate positioning and mounting of the snap ring.

In some embodiments, an end of the opening away from the mounting cap is provided with a flared section, and when the locking block abuts against the snap ring, the snap ring is accommodated in the flared section.

The flared section is provided in the opening to accommodate the snap ring, thereby providing protection for the snap ring.

In some embodiments, a first mounting hole is provided on a side surface of the mounting cap, the adaptation structure includes a second mounting hole provided on a side surface of the first end, and the locking member includes a connecting member fittingly mounted in the first mounting hole and the second mounting hole.

By providing the connecting member and mounting the connecting member in the first mounting hole and the second mounting hole, the mounting cap can be fixed to the mounting screw, which can both restrict the axial movement of the mounting cap along the mounting screw and restrict rotation of the mounting cap on the mounting screw, thereby providing a simple structure and convenient fixation.

In some embodiments, the lock sleeve is provided with a slideway configured to guide the mounting screw to rotate by a set angle, and the mounting screw is provided with a guide pin, the guide pin extending into the slideway.

In a case that the tightening screw pulls the mounting screw to move axially along the lock sleeve, through the cooperation between the slideway and the guide pin, the mounting screw can be guided to rotate by a set angle, thereby driving the mounting cap to rotate by a set angle. During mounting use, the mounting screw is pulled in the direction toward the second end to rotate the mounting cap by the set angle, so that the mounting cap is hooked to the load-bearing medium. Conversely, the mounting screw is pushed in the direction toward the first end to reverse the mounting cap by the set angle, separating the mounting cap from the load-bearing medium, thereby achieving quick mounting and separation.

In some embodiments, the mounting structure further includes an anti-rotation mechanism, where the anti-rotation mechanism includes a sliding sleeve configured to restrict rotation of the tightening screw and a stop member that cooperates to restrict rotation of the sliding sleeve, the stop member is fixedly connected to the lock sleeve, and the sliding sleeve is slidably sleeved on the tightening screw along the axial direction of the tightening screw.

By fixing the stop member on the lock sleeve and sleeving the sliding sleeve on the tightening screw, the sliding sleeve is connected to the stop member, so that the stop member can restrict rotation of the sliding sleeve, thereby restricting rotation of the tightening screw. Since the tightening screw is threadedly connected to the second end of the mounting screw, rotation of the mounting screw can also be restricted, thereby achieving an anti-rotation effect. When a tool is used to push the sliding sleeve to slide on the tightening screw to separate the sliding sleeve from the stop member, the tightening screw can be rotated to drive the mounting screw to rotate and move axially.

In some embodiments, an elastic member configured to elastically push the sliding sleeve in the direction toward the stop member is mounted in the lock sleeve.

The elastic member is provided, and after the tool pushing the sliding sleeve away from the stop member is removed, the elastic member can push the sliding sleeve into contact with the stop member to restrict rotation of the sliding sleeve, thereby restricting rotation of the tightening screw to achieve an anti-rotation effect.

According to a second aspect, an embodiment of the present application provides a battery, including the mounting structure as described in the above embodiments.

According to a third aspect, an embodiment of the present application provides an electric device, including the mounting structure as described in the above embodiments, or including the battery as described in the above embodiments.

The above description is only an overview of the technical solutions of the present application. In order to more clearly understand the technical means of the present application and to implement them in accordance with the content of the description, and to make the above and other objects, features, and advantages of the present application more obvious and easier to understand, the specific embodiments of the present application are specifically illustrated below.

### DESCRIPTION OF DRAWINGS

To describe the technical solutions in the embodiments of the present application more clearly, the following briefly describes the accompanying drawings required for use in the description of the embodiments or exemplary techniques. Apparently, the accompanying drawings in the following description show merely some embodiments of the present application, and persons of ordinary skill in the art may still derive other drawings from the accompanying drawings without creative efforts.
FIG. 1 is a schematic structural diagram of a vehicle according to some embodiments of the present application;
FIG. 2 is an exploded schematic structural diagram of a battery according to some embodiments of the present application;
FIG. 3 is a cross-sectional schematic structural diagram of a mounting structure according to some embodiments of the present application;
FIG. 4 is an exploded schematic structural diagram of a mounting structure according to some embodiments of the present application;
FIG. 5 is a schematic structural diagram of a mounting screw according to some embodiments of the present application;
FIG. 6 is a cross-sectional schematic structural diagram of the first end in FIG. 3 with a mounting cap and a locking block mounted thereon;
FIG. 7 is an exploded schematic structural diagram of the mounting cap and the locking block in FIG. 6;
FIG. 8 is a schematic structural diagram of a mounting structure separated from a load-bearing medium according to some embodiments of the present application;
FIG. 9 is a schematic structural diagram of a mounting structure mounted and connected to a load-bearing medium according to some embodiments of the present application;
FIG. 10 is an exploded schematic structural diagram of a mounting screw, a mounting cap, and a locking block according to other embodiments of the present application;
FIG. 11 is an exploded schematic structural diagram of a mounting screw, a mounting cap, and a locking block according to yet other embodiments of the present application;
FIG. 12 is a cross-sectional schematic structural diagram of a combination of a first end of a mounting screw, a mounting cap, and a locking block according to further embodiments of the present application;
FIG. 13 is a cross-sectional schematic structural diagram of a combination of a first end of a mounting screw, a mounting cap, and a locking member according to further embodiments of the present application;
FIG. 14 is a cross-sectional schematic structural diagram of a combination of a first end of a mounting screw, a mounting cap, and a locking member according to further embodiments of the present application.

In the drawings, main reference numerals are:
1000. vehicle; 1001. battery; 1002. controller; 1003. motor;
100. enclosure; 101. first portion; 102. second portion; 200. battery cell;
300. mounting structure; 31. mounting screw; 311. first end; 312. second end; 313. externally threaded section; 314. adaptation structure; 3141. stop portion; 31411. first flat surface; 31412. groove; 31413. protrusion; 31414. first curved surface; 3142. second mounting hole; 315. annular groove; 316. guide pin; 32. mounting cap; 321. connection hole; 3211. internal thread; 322. first mounting hole; 33. locking member; 331. locking block; 3311. opening; 3312. mating portion; 33121. second flat surface; 33122. protruding block; 33123. slot; 33124. second curved surface; 3313. flared section; 3201. recess; 3202. insertion protrusion; 332. connecting member; 34. snap ring; 35. lock sleeve; 350. cavity; 351. slideway; 3511. inclined section; 3512. first axial section; 3513. second axial section; 36. tightening screw; 361. internally threaded section; 37. anti-rotation mechanism; 371. stop member; 372. sliding sleeve; 38. elastic member;
80. supporting medium; 90. load-bearing medium; and 91. rectangular hole.

### DESCRIPTION OF EMBODIMENTS

To make the technical problems to be solved, technical solutions and beneficial effects of the present application clearer, the present application will be further described in detail below with reference to the accompanying drawings and embodiments. It should be understood that the specific embodiments described herein are only used to explain the present application and are not intended to limit the present application.

Unless otherwise defined, all technical and scientific terms used herein shall have the same meanings as commonly understood by those skilled in the art to which the present application relates. The terms used herein are intended to merely describe the specific embodiments rather than to limit the present application. The terms "include", "comprise", "have", and any other variations thereof in the specification, claims and brief description of drawings of the present application are intended to cover non-exclusive inclusions.

In the description of some embodiments of the present application, the technical terms "first", "second", and the like are merely intended to distinguish between different objects, and shall not be understood as any indication or implication of relative importance or any implicit indication of the number, sequence or primary-secondary relationship of the technical features indicated. Therefore, a feature limited by "first" or "second" may explicitly or implicitly include one or more features.

In this specification, reference to "embodiment" means that specific features, structures or characteristics described with reference to the embodiment may be incorporated in at least one embodiment of the present application. The word "embodiment" appearing in various places in this specification does not necessarily refer to the same embodiment or an independent or alternative embodiment that is exclusive of other embodiments. Those skilled in the art explicitly and implicitly understand that the embodiments described herein can be combined with other embodiments in any suitable manner.

In the description of the embodiments of the present application, the term "and/or" is merely an association describing associated objects, indicating that three relationships can exist, for example, A and/or B can indicate: A exists alone, A and B exist simultaneously, B exists alone. In addition, the character "/" in this specification generally indicates that the associated objects are in an "or" relationship.

In the description of the embodiments of the present application, the term "a plurality of" refers to two or more (including two), similarly, "a plurality of groups" refers to two or more groups (including two groups), and "a plurality of pieces" refers to two or more pieces (including two pieces). The meaning of "several" is one or more, unless otherwise specifically limited.

In the description of the embodiments of the present application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of the present application rather than indicating or implying that the devices or components mentioned must have specific orientations or must be constructed or manipulated according to specific orientations, and therefore shall not be construed as any limitations on embodiments of the present application.

In the description of the embodiments of the present application, unless otherwise specified and defined explicitly, technical terms "mounting", "connection", "joining", and "fastening" should be understood in their general senses. For example, they may be a fixed connection, a detachable connection, or an integral connection, may be a mechanical connection or electrical connection, or may be a direct connection, an indirect connection via an intermediate medium, or communication between two elements or an interaction between two elements. Persons of ordinary skill in the art can understand specific meanings of these terms in the embodiments of the present application as suitable to specific situations.

In the description of the embodiments of the present application, unless otherwise specified and defined explicitly, when an element is referred to as being "fixed to" or "disposed on" the other element, it may be directly on the other element or indirectly on the other element. When an element is referred to as being "connected to" another element, it may be directly connected to the other element or indirectly connected to the other element.

The battery cells in the embodiments of the present application include, but are not limited to, lithium-ion secondary batteries, lithium-ion primary batteries, lithium-sulfur batteries, sodium-lithium ion batteries, sodium-ion batteries, or magnesium-ion batteries, and the like. The shape of the battery cell includes, but is not limited to, cylindrical, flat, rectangular, or other shapes, and the like. Battery cells are generally classified according to packaging methods, and include, but are not limited to, cylindrical battery cells, prismatic battery cells, and pouch battery cells.

The battery mentioned in the embodiments of the present application refers to a single physical module that includes one or more battery cells to provide higher voltage and capacity. For example, the battery mentioned in the present application may include a battery module or a battery pack, and the like. The battery generally includes an enclosure for packaging one or more battery cells. The enclosure can prevent liquids or other foreign objects from affecting charging or discharging of the battery cells to a certain extent. In some cases, battery cells may be used directly, that is, the battery may not include an enclosure, which is not limited herein.

In the battery, when there are a plurality of battery cells, the plurality of battery cells may be connected in series, in parallel, or in a hybrid manner, where hybrid connection means that there are both series and parallel connections among a plurality of battery cells. The plurality of battery cells may be directly connected in series, in parallel, or in a hybrid manner, and then the overall formed by the plurality of battery cells is accommodated in the enclosure. Alternatively, the battery may have a plurality of battery cells first connected in series, in parallel, or in a hybrid manner to form a battery module, and then a plurality of battery modules are connected in series, in parallel, or in a hybrid manner to form an overall and accommodated in the enclosure. The battery may alternatively include other structures, for example, the battery may further include a busbar component for achieving electrical connection between a plurality of battery cells.

The charging rate of electric vehicles has always been a concern for users. Quick battery swapping of electric vehicles can address concerns regarding the relatively long charging time required for electric vehicles. To achieve quick battery swapping for electric vehicles, an effective approach is to provide a mounting lock on the battery, by means of which the battery is mounted and locked onto a vehicle frame, thereby enabling quick mounting of the battery. During removal, the battery only needs to be unlocked and taken off the vehicle.

One type of mounting lock uses a mounting screw having a mounting cap at the top to achieve quick engagement with a vehicle frame by mounting the mounting cap onto the vehicle frame. In such a structure, the lower end of the mounting screw needs to be formed relatively thin, so that it can be inserted from the top into a lock sleeve of the mounting lock and connected to an internally threaded section of a tightening screw, and the tightening screw is used to pull the mounting screw to move axially along the lock sleeve and drive the mounting screw and the mounting cap thereon to rotate, thereby achieving engagement of the mounting cap with the vehicle frame or unlocking and separating the mounting cap from the frame. However, since the tightening screw needs to frequently rotate relative to the lower end of the mounting screw, this results in relatively low strength at the mating position between the lower end of the mounting screw and the tightening screw, thereby affecting the service life of the mounting lock.

Based on the above considerations, in order to address the problem of relatively low structural strength at the lower end of the mounting screw of the mounting lock, an embodiment of the present application provides a mounting structure. A connection hole is provided in the mounting cap for connection with the first end of the mounting screw, so that the mounting cap and the mounting screw can be manufactured separately. During assembly, the first end of the mounting screw can be inserted from one end of the lock sleeve and then extended out from the other end. In this way, the diameter of the second end of the mounting screw can be set relatively large to improve the structural strength of the second end of the mounting screw, thereby improving the strength at the mating position between the second end of the mounting screw and the tightening screw.

The battery disclosed in the embodiments of the present application may be not only applied to electric vehicles, but also to other electric devices that use batteries as power sources or various energy storage systems that use batteries as energy storage elements, such as energy storage power systems applied to hydropower, thermal power, wind power, and solar power stations, and the like. The electric device may be, but is not limited to, mobile phones, tablets, notebook computers, electric toys, electric tools, electric bicycles, electric motorcycles, electric vehicles, ships, and spacecraft. The electric toys may include fixed or mobile electric toys, such as game consoles, electric vehicle toys, electric ship toys, and electric aircraft toys. The spacecraft may include airplanes, rockets, space shuttles, and spaceships, and the like.

For convenience of description, an embodiment of the present application provides an electric device, and the electric device is described by taking a vehicle as an example.

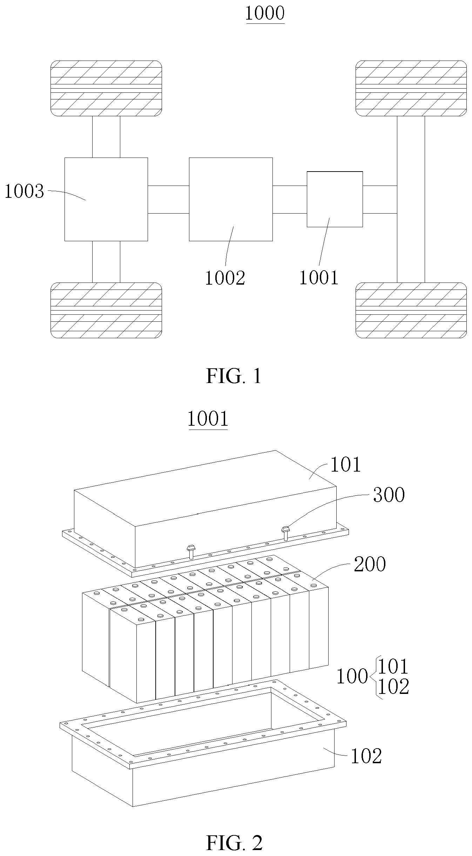

Referring to FIG. 1, FIG. 1 is a schematic structural diagram of a vehicle 1000 provided in some embodiments of the present application. The vehicle 1000 may be a fuel vehicle, a gas vehicle, or a new energy vehicle. The new energy vehicle may be a pure electric vehicle, a hybrid vehicle, or a range-extended vehicle, or the like. The vehicle 1000 is provided with a battery 1001 inside, and the battery 1001 may be positioned at the bottom, front, or rear of the vehicle 1000. The battery 1001 may be configured to supply power to the vehicle 1000, for example, the battery 1001 may serve as the operating power source of the vehicle 1000. The vehicle 1000 may further include a controller 1002 and a motor 1003. The controller 1002 is configured to control the battery 1001 to supply power to the motor 1003, for example, to satisfy power needs of start, navigation, and driving of the vehicle 1000.

In some embodiments of the present application, the battery 1001 may not only serve as the operating power source of the vehicle 1000, but also as the driving power source of the vehicle 1000, replacing or partially replacing fuel or natural gas to provide driving power for the vehicle 1000.

Referring to FIG. 2, FIG. 2 is an exploded schematic structural diagram of a battery 1001 according to some embodiments of the present application. The battery 1001 includes an enclosure 100 and a battery cell 200, and the battery cell 200 is accommodated in the enclosure 100. The enclosure 100 is configured to provide an accommodation space for the battery cell 200, and the enclosure 100 may have various structures. In some embodiments, the enclosure 100 may include a first portion 101 and a second portion 102. The first portion 101 and the second portion 102 are covered with each other, and the first portion 101 and the second portion 102 together define an accommodation space for accommodating the battery cell 200. The second portion 102 may be a hollow structure with one end open, the first portion 101 may be a plate-like structure, and the first portion 101 covers the open side of the second portion 102, so that the first portion 101 and the second portion 102 together define the accommodation space. The first portion 101 and the second portion 102 may alternatively both be hollow structures with one side open, and the open side of the first portion 101 covers the open side of the second portion 102. Alternatively, the enclosure 100 formed by the first portion 101 and the second portion 102 may have various shapes, such as cylindrical, or cuboid. A plurality of battery cells 200 are connected in parallel, in series, or in a hybrid manner and disposed in the enclosure 100 formed after the first portion 101 and the second portion 102 are fastened together.

In some embodiments, a mounting structure 300 may be mounted on the enclosure 100 to enable quick mounting of the battery 1001 onto a vehicle frame or other electric devices, and also to facilitate replacement of the battery 1001.

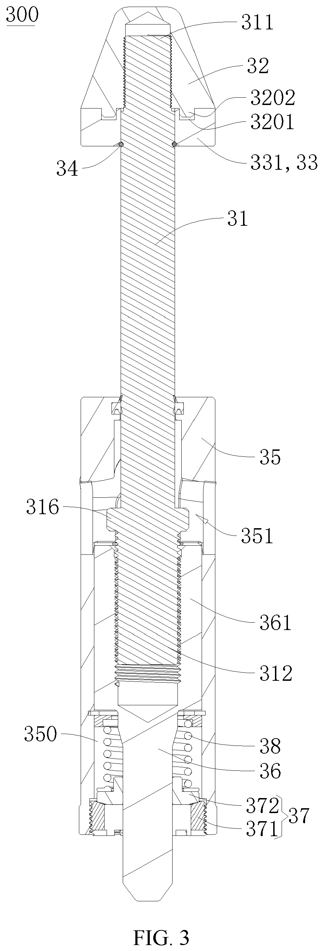

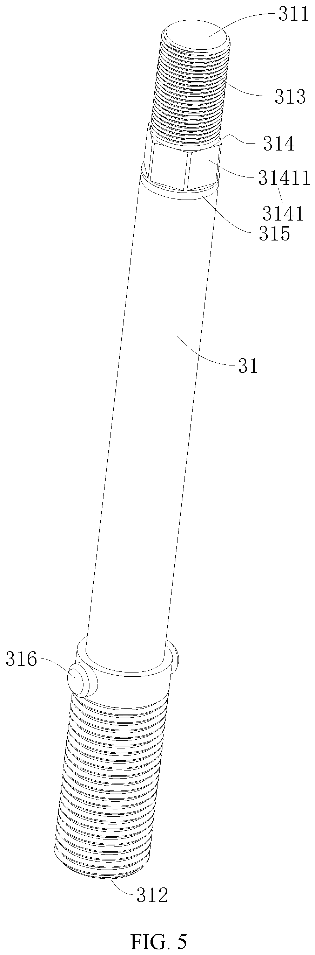

Referring to FIG. 3 to FIG. 7, according to some embodiments of the present application, the present application providers a mounting structure 300 including a lock sleeve 35, a mounting screw 31, a tightening screw 36, and a mounting cap 32. The lock sleeve 35 is provided with a cavity 350, and the cavity 350 extends through two opposite ends of the lock sleeve 35 along the axial direction of the lock sleeve 35. The mounting screw 31 has opposite first end 311 and second end 312, the second end 312 of the mounting screw 31 is disposed in the cavity 350, and the first end 311 of the mounting screw 31 extends out of the lock sleeve 35. The tightening screw 36 is disposed in the lock sleeve 35, the tightening screw 36 is provided with an internally threaded section 361, and the internally threaded section 361 is threadedly connected to the second end 312 of the mounting screw 31. The mounting cap 32 is provided with a connection hole 321 adaptively connected to the first end 311 of the mounting screw 31.

The lock sleeve 35 refers to a housing structure of the mounting structure 300. During use, the lock sleeve 35 is connected to a supporting medium 80, such as supported on the enclosure 100 of the battery 1001, to fix the mounting structure 300 to the supporting medium 80. The lock sleeve 35 cooperates with the mounting cap 32 to clamp a load-bearing medium 90 such as a vehicle frame, to fix the mounting structure 300 to the load-bearing medium 90, thereby connecting the supporting medium 80 to the load-bearing medium 90. Alternatively, the lock sleeve 35 and the mounting cap 32 may cooperate to clamp the supporting medium 80 and the load-bearing medium 90 to connect the supporting medium 80 to the load-bearing medium 90. The cavity 350 refers to an accommodation space provided in the lock sleeve 35, and along the axial direction of the lock sleeve 35, the cavity 350 extends through two opposite ends of the lock sleeve 35, so that the cavity 350 forms a hole-like structure extending through the lock sleeve 35, to facilitate processing and manufacturing of the lock sleeve 35. An outer contour of the lock sleeve 35 may be configured in shapes such as a block or a column. The lock sleeve 35 may be made of materials such as steel, manganese, and aluminum alloy.

The mounting screw 31 refers to a rod-like structure with an external thread provided at the second end 312. The first end 311 and the second end 312 refer to opposite end portions of the mounting screw 31. After assembly, the first end 311 of the mounting screw 31 is located outside the lock sleeve 35, and the second end 312 of the mounting screw 31 is located inside the lock sleeve 35.

The tightening screw 36 refers to a rod-like structural member that can be rotated by a tool. The tightening screw 36 is disposed in the lock sleeve 35, specifically, the tightening screw 36 is disposed in the cavity 350 of the lock sleeve 35, so as to be protected by the lock sleeve 35. The internally threaded section 361 refers to a section provided of the tightening screw 36 with internal threads. The internally threaded section 361 is threadedly connected to the second end 312 of the mounting screw 31, so that when the tightening screw 36 is rotated, the mounting screw 31 can be driven to move axially.

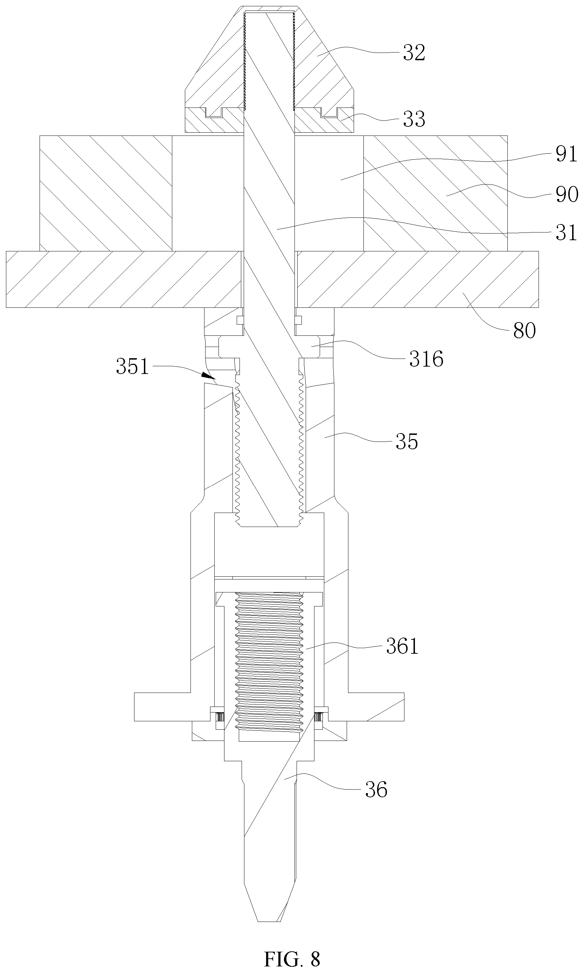

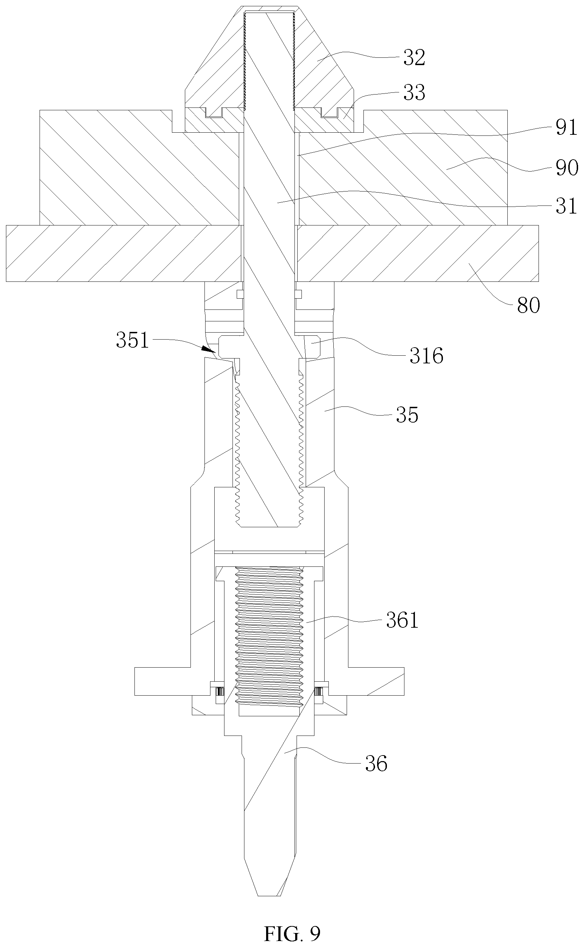

Referring to FIG. 8 and FIG. 9 together, the mounting cap 32 refers to a structural member configured to be hooked onto the load-bearing medium 90. The connection hole 321 refers to a hole structure provided in the mounting cap 32. The connection hole 321 is adapted to the first end 311 of the mounting screw 31, so that the first end 311 of the mounting screw 31 can be adapted and connected to the connection hole 321 to mount the mounting cap 32 on the first end 311 of the mounting screw 31. A length direction and a width direction of the mounting cap 32 are both perpendicular to a height direction of the mounting cap 32. When the mounting cap 32 is mounted on the mounting screw 31, the height direction of the mounting cap 32 is aligned with the axial direction of the mounting screw 31, and on a section perpendicular to the height direction of the mounting cap 32, a longer side corresponds to the length of the mounting cap 32, and a shorter side corresponds to the width of the mounting cap 32. The length of the mounting cap 32 is generally set greater than its width, so that on a section perpendicular to the height direction of the mounting cap 32, the mounting cap 32 has a rectangular structure. In one application example, a rectangular hole 91 is provided in the load-bearing medium 90. A length of the rectangular hole 91 in the load-bearing medium 90 is set greater than the length of the mounting cap 32, and a width of the rectangular hole 91 in the load-bearing medium 90 is set greater than the width of the mounting cap 32 and less than the length of the mounting cap 32. During mounting assembly, when the length direction of the mounting cap 32 is aligned with the length direction of the rectangular hole 91, the mounting cap 32 can pass through the rectangular hole 91. The mounting cap 32 is then rotated, and the mounting screw 31 is pulled, so that both ends of the mounting cap 32 can be supported on opposite sides of the rectangular hole 91, thereby achieving mounting assembly. Conversely, by loosening the mounting screw 31 so that the mounting cap 32 rotates until its length direction is aligned with the length direction of the rectangular hole 91, the mounting cap 32 and the mounting screw 31 can be removed from the rectangular hole 91 of the load-bearing medium 90, thereby achieving rapid disassembly.

By providing the connection hole 321 in the mounting cap 32 for connection with the first end 311 of the mounting screw 31, the mounting cap 32 and the mounting screw 31 can be manufactured separately and then assembled. Since the mounting screw 31 and the mounting cap 32 are manufactured separately, during assembly of the mounting structure 300, the first end 311 of the mounting screw 31 can be inserted into the cavity 350 from one end of the lock sleeve 35 and then extended out from the other end of the lock sleeve 35, with the second end 312 of the mounting screw 31 disposed in the lock sleeve 35. In this way, because the second end 312 of the mounting screw 31 does not need to pass through the lock sleeve 35, the diameter of the second end 312 of the mounting screw 31 can be set relatively large, thereby enhancing the structural strength of the second end 312 and facilitating connection and rotation with the internally threaded section 361 of the tightening screw 36.

In the technical solution of the embodiments of the present application, by providing the mounting screw 31 and the mounting cap 32, and providing the connection hole 321 in the mounting cap 32 for connection with the first end 311 of the mounting screw 31. During assembly, the first end 311 of the mounting screw 31 can be inserted from one end of the lock sleeve 35 and then extended from the other end, so that the diameter of the second end 312 of the mounting screw 31 can be set relatively large to improve the structural strength of the second end 312 of the mounting screw 31, thereby improving the strength at the mating position between the second end 312 of the mounting screw 31 and the tightening screw 36.

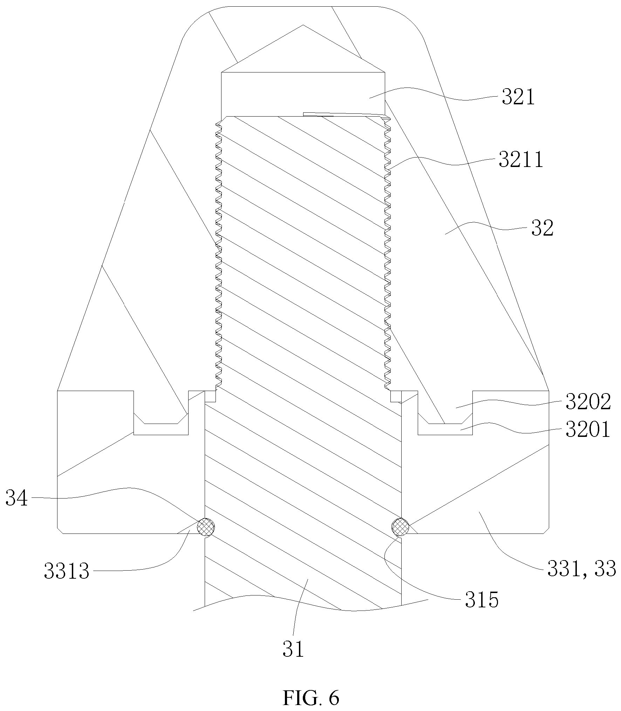

Referring to FIG. 6, FIG. 10 to FIG. 14, in some embodiments, the mounting structure 300 further includes a locking member 33 for locking the mounting cap 32 to the first end 311, and the first end 311 is provided with an adaptation structure 314 that cooperates with the locking member 33 to lock the mounting cap 32.

Locking refers to fixing two structural members together so as to prevent the two structural members from moving relative to each other. When two structural members are connected and fixed in a locking manner, a specific tool may be used for unlocking to separate the two structural members, which facilitates processing and manufacturing as well as maintenance and replacement.

The locking member 33 refers to a structural member that locks the mounting cap 32 to the first end 311 of the mounting screw 31.

The adaptation structure 314 refers to a structural member provided on the first end 311 of the mounting screw 31 and configured to cooperate with the locking member 33 for locking.

The locking member 33 and the adaptation structure 314 are provided to lock the mounting cap 32 to the first end 311 of the mounting screw 31, so that the mounting cap 32 is firmly connected to the mounting screw 31, reducing the risk of the mounting cap 32 moving axially along the mounting screw 31. Certainly, since the mounting cap 32 is hooked to the load-bearing medium 90, friction may occur between the mounting cap 32 and the load-bearing medium 90. For example, when the load-bearing medium 90 vibrates, or when the mounting cap 32 is mounted to or removed from the load-bearing medium 90, friction may occur between the mounting cap 32 and the load-bearing medium 90, leading to damage to the mounting cap 32. When the mounting cap 32 is locked to the first end 311 of the mounting screw 31, a tool may be used to unlock the locking member 33, so that the mounting cap 32 can be separated from the first end 311 of the mounting screw 31, thereby facilitating maintenance or replacement.

In some embodiments, the first end 311 includes an externally threaded section 313, the connection hole 321 is provided with an internal thread 3211 for threaded connection with the externally threaded section 313. The locking member 33 includes a locking block 331 connected to the mounting cap 32, the locking block 331 is provided with an opening 3311 for inserting the first end 311, the adaptation structure 314 includes a stop portion 3141 provided on a side surface of the first end 311, and an inner surface of the opening 3311 is provided with a mating portion 3312. The stop portion 3141 is adapted to the mating portion 3312 to restrict the locking block 331 from rotating around the mounting screw 31.

The externally threaded section 313 refers to a section of the first end 311 of the mounting screw 31 that is provided with an external thread. The internal thread 3211 is provided in the connection hole 321 for threaded connection with the externally threaded section 313, thereby mounting the mounting cap 32 on the first end 311 of the mounting screw 31.

The locking block 331 refers to a structural member used to restrict rotation of the mounting cap 32. The locking block 331 is provided with the opening 3311 so as to be sleeved onto the first end 311 of the mounting screw 31, thereby mounting the locking block 331 on the first end 311 of the mounting screw 31. The inner surface of the opening 3311 is provided with the mating portion 3312, and the adaptation structure 314 uses the stop portion 3141. When the locking block 331 is sleeved onto the first end 311 of the mounting screw 31 and reaches a position corresponding to the stop portion 3141, the stop portion 3141 sleeved onto the mating portion 3312 to restrict the locking block 331 from rotating around the mounting screw 31. Since the locking block 331 is connected to the mounting cap 32, when the locking block 331 cannot rotate on the mounting screw 31, rotation of the mounting cap 32 relative to the mounting screw 31 is also restricted. Because the mounting cap 32 is threadedly connected to the mounting screw 31, the mounting cap 32 cannot rotate on the mounting screw 31, which means that the mounting cap 32 is fixed, achieving the anti-loosening effect of the mounting cap 32.

The externally threaded section 313 and the internal thread 3211 are provided to enable the mounting cap 32 to be threadedly mounted on the first end 311 of the mounting screw 31, thereby facilitating connection. The mating portion 3312 is provided in the opening 3311 of the locking block 331, and the stop portion 3141 is provided on the side surface of the first end 311. The stop portion 3141 cooperates with the mating portion 3312 to restrict rotation of the locking block 331 around the mounting screw 31. Since the locking block 331 is connected to the mounting cap 32, rotation of the mounting cap 32 on the externally threaded section 313 can also be restricted, thereby reducing, to a certain extent, the risk of loosening of the mounting cap 32.

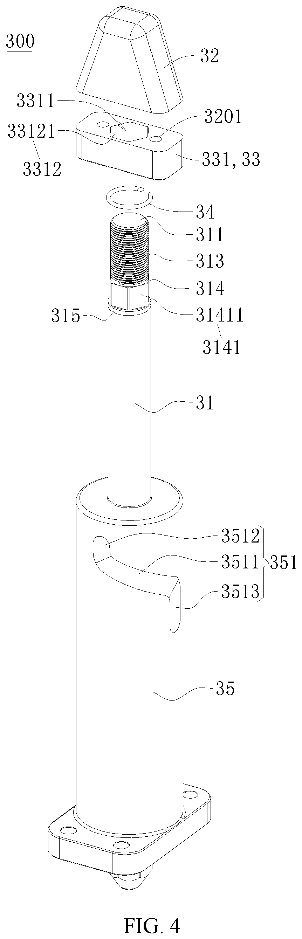

Referring to FIG. 4 to FIG. 7, in some embodiments, the stop portion 3141 includes a first flat surface 31411, and the mating portion 3312 includes a second flat surface 33121 adapted to fit with the stop portion 3141.

Since the outer contour of the mounting screw 31 is cylindrical, and the stop portion 3141 is configured as the first flat surface 31411, and the mating portion 3312 is configured as the second flat surface 33121, that is, the portion inside the opening 3311 of the locking block 331 corresponding to the stop portion 3141 is configured as a flat surface. When the locking block 331 is mounted on the mounting screw 31, the two flat surfaces abut against each other, which can restrict rotation of the locking block 331 on the mounting screw 31, thereby restricting rotation of the mounting cap 32 on the mounting screw 31 and achieving an anti-loosening effect of the mounting cap 32.

The stop portion 3141 and the mating portion 3312 both are provided with flat surfaces, and when the two flat surfaces abut against each other, rotation of the locking block 331 around the mounting screw 31 can be restricted, thereby restricting rotation of the mounting cap 32 on the externally threaded section 313 and, to a certain extent, reducing the risk of loosening of the mounting cap 32.

In some embodiments, one or more flat stop portions 3141 can be provided on the circumferential side of the mounting screw 31, and the number of flat mating portions 3312 provided on the inner wall of the opening 3311 of the corresponding locking block 331 corresponds one-to-one with the stop portions 3141. For example, the cross-section of a section of the mounting screw 31 corresponding to the stop portion 3141 is configured as a polygonal shape, such as triangular, rectangular, hexagonal, and the like, and accordingly, the opening 3311 is configured as a corresponding polygonal shape.

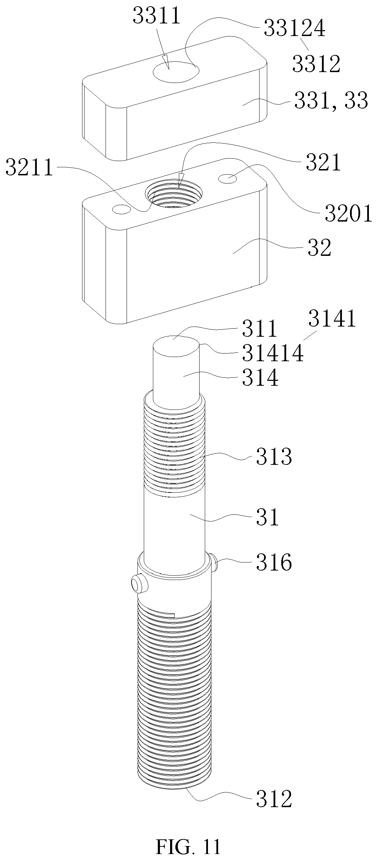

Referring to FIG. 11, in some embodiments, the stop portion 3141 includes a first curved surface 31414, the first curved surface 31414 is eccentrically arranged with respect to the axial direction of the mounting screw 31, and the mating portion 3312 includes a second curved surface 33124 adapted to fit with the stop portion 3141.

The first curved surface 31414 being eccentrically arranged with respect to the axial direction of the mounting screw 31 means that the central axis of the first curved surface 31414 is spaced from the central axis of the mounting screw 31, or the central axis of a part of the first curved surface 31414 is spaced from the central axis of the mounting screw 31. This makes the cross-section of the mounting screw 31 at the stop portion 3141 a non-circular structure, and the mating portion 3312 is adapted to the stop portion 3141, so that the corresponding opening 3311 is also a non-circular hole. In this way, when the locking block 331 is mounted on the mounting screw 31, rotation of the locking block 331 on the mounting screw 31 can be restricted, thereby restricting rotation of the mounting cap 32 on the mounting screw 31, achieving an anti-loosening effect of the mounting cap 32.

An eccentric first curved surface 31414 is provided on the mounting screw 31, and the mating portion 3312 is provided with a second curved surface 33124 cooperating with the first curved surface 31414 of the stop portion 3141, which can also restrict rotation of the locking block 331 around the mounting screw 31, thereby restricting rotation of the mounting cap 32 on the externally threaded section 313 and, to a certain extent, reducing the risk of loosening of the mounting cap 32.

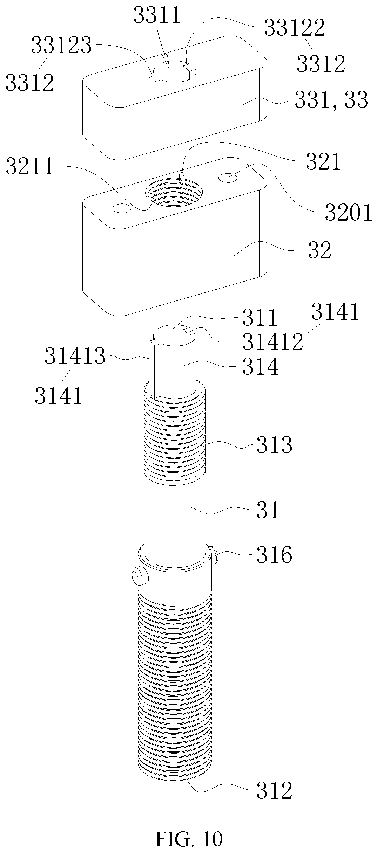

Referring to FIG. 10, in some embodiments, the stop portion 3141 includes a protrusion 31413, and the mating portion 3312 includes a slot 33123 for insertion of the protrusion 31413, the slot 33123 being arranged to extend axially along the mounting screw 31.

The protrusion 31413 refers to a protruding structure provided on a side surface of the mounting screw 31. The protrusion 31413 may be provided in an elongated shape, a columnar shape, a point-like shape, or the like. The protrusion 31413 and the mounting screw 31 may be integrally formed or separately manufactured and then welded to the mounting screw 31.

The slot 33123 refers to a groove structure provided on the inner surface of the opening 3311 of the locking block 331.

When the locking block 331 is mounted on the mounting screw 31, the protrusion 31413 is inserted into the slot 33123 to restrict rotation of the locking block 331 on the mounting screw 31, thereby restricting rotation of the mounting cap 32 on the externally threaded section 313.

The stop portion 3141 uses the protrusion 31413, and the mating portion 3312 uses the slot 33123. Through the mating insertion of the protrusion 31413 and the slot 33123, the locking block 331 is restricted from rotating around the mounting screw 31, thereby restricting rotation of the mounting cap 32 on the externally threaded section 313 and, to a certain extent, reducing the risk of loosening of the mounting cap 32.

Referring to FIG. 10, in some embodiments, the stop portion 3141 includes a groove 31412 arranged to extend axially along the mounting screw 31, and the mating portion 3312 includes a protruding block 33122 adapted to insert into the groove 31412.

The groove 31412 refers to a groove structure provided on a side surface of the mounting screw 31.

The protruding block 33122 refers to a protruding structure provided on the inner surface of the opening 3311 of the locking block 331. The protruding block 33122 may be provided in an elongated shape, a columnar shape, a point-like shape, or the like. The protruding block 33122 and the locking block 331 may be integrally formed or separately manufactured and then welded to the inner surface of the opening 3311 of the locking block 331.

When the locking block 331 is mounted on the mounting screw 31, the groove 31412 is sleeved onto the protruding block 33122 to restrict rotation of the locking block 331 on the mounting screw 31, thereby restricting rotation of the mounting cap 32 on the externally threaded section 313.

The stop portion 3141 is configured as the groove 31412, and the mating portion 3312 is configured as the protruding block 33122. Through the mating insertion between the protruding block 33122 and the groove 31412, rotation of the locking block 331 around the mounting screw 31 is restricted, thereby restricting rotation of the mounting cap 32 on the externally threaded section 313 and, to a certain extent, reducing the risk of loosening of the mounting cap 32.

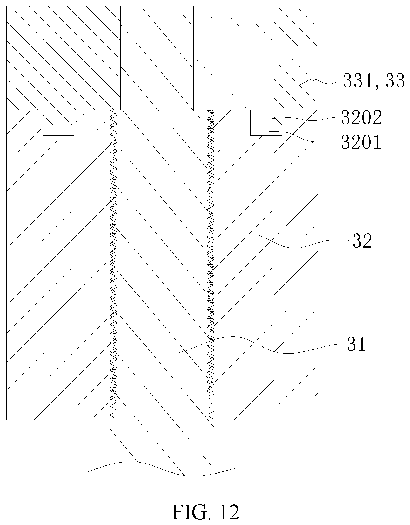

Referring to FIG. 10 and FIG. 12, the stop portion 3141 is provided at an end of the externally threaded section 313 away from the second end 312, and a radius of the externally threaded section 313 is greater than or equal to a maximum distance from the side surface of the stop portion 3141 to the central axis of the mounting screw 31.

The radius of the externally threaded section 313 refers to a distance from the outer circumferential surface of the externally threaded section 313 to the central axis of the mounting screw 31.

Since the stop portion 3141 is provided on the circumferential side surface of the mounting screw 31, the maximum distance from the side surface of the stop portion 3141 to the central axis of the mounting screw 31 refers to a maximum distance from various places on the side surface of the stop portion 3141 to the central axis of the mounting screw 31.

Since the connection hole 321 in the mounting cap 32 is threadedly connected to the externally threaded section 313, an inner diameter of the connection hole 321 of the mounting cap 32 is adapted to the radius of the externally threaded section 313. The stop portion 3141 is provided at the end of the externally threaded section 313 away from the second end 312, and a radius of the externally threaded section 313 is greater than or equal to a maximum distance from the side surface of the stop portion 3141 to the central axis of the mounting screw 31, then an inner diameter of the connection hole 321 in the mounting cap 32 is greater than or equal to a maximum distance from the side surface of the stop portion 3141 to the central axis of the mounting screw 31, so that the mounting cap 32 can pass through the stop portion 3141 and be connected to the externally threaded section 313.

The stop portion 3141 is provided at the end of the externally threaded section 313 away from the second end 312 to facilitate processing and manufacturing of the stop portion. Since the internal thread 3211 of the connection hole 321 of the mounting cap 32 is adaptively connected to the externally threaded section 313, an inner diameter of the connection hole 321 is equal to or close to the radius of the externally threaded section 313. By setting a radius of the externally threaded section 313 greater than or equal to a maximum distance from the side surface of the stop portion 3141 to the central axis of the mounting screw 31, the stop portion 3141 can pass through the connection hole 321, so that the internal thread 3211 can be connected to the externally threaded section 313, thereby mounting the mounting cap 32 on the mounting screw 31.

Referring to FIG. 4 to FIG. 6, in some embodiments, the stop portion 3141 is provided at an end of the externally threaded section 313 close to the second end 312, and the radius of the externally threaded section 313 is less than or equal to the minimum distance from the side surface of the stop portion 3141 to the central axis of the mounting screw 31.

The radius of the externally threaded section 313 refers to a distance from the outer circumferential surface of the externally threaded section 313 to the central axis of the mounting screw 31.

Since the stop portion 3141 is provided on the circumferential side surface of the mounting screw 31, the minimum distance from the side surface of the stop portion 3141 to the central axis of the mounting screw 31 refers to a minimum distance from various places on the side surface of the stop portion 3141 to the central axis of the mounting screw 31.

Since the locking block 331 is fittingly matched at a position of the mounting screw 31 corresponding to the stop portion 3141, the shape and size of the opening 3311 in the locking block 331 match those of a section corresponding to the stop portion 3141 of the mounting screw 31. As the stop portion 3141 is provided at the end of the externally threaded section 313 close to the second end 312, and the radius of the externally threaded section 313 is less than or equal to the minimum distance from the side surface of the stop portion 3141 to the central axis of the mounting screw 31, the minimum distance from the mating portion 3312 in the opening 3311 of the locking block 331 to the central axis of the opening 3311 is greater than or equal to the radius of the externally threaded section 313, so that the locking block 331 can pass through the externally threaded section 313 and be connected to the corresponding section of the stop portion 3141.

When the stop portion 3141 is provided at the end of the externally threaded section 313 close to the second end 312, during mounting use, the locking block 331 can be brought into contact with the load-bearing medium 90, which can protect the mounting cap 32. Since the locking block 331 is located at a position corresponding to the stop portion 3141, the opening 3311 on the locking block 331 needs to be adapted to be fitted at a position on the mounting screw 31 corresponding to the stop portion 3141. Therefore, the radius of the externally threaded section 313 is set to be less than or equal to the minimum distance from the side surface of the stop portion 3141 to the central axis of the mounting screw 31, to facilitate the externally threaded section 313 passing through the opening 3311, allowing the opening 3311 to reach the stop portion 3141, thereby mounting the locking block 331 on the mounting screw 31 and connecting the mating portion 3312 to the stop portion 3141.

In some embodiments, the opening 3311 is in interference fit with a region of the mounting screw 31 corresponding to the stop portion 3141. The inner surface of the opening 3311 is connected in interference fit to the region of the mounting screw 31 corresponding to the stop portion 3141, to fix the locking block 331 to the mounting screw 31, which can provide a good anti-loosening effect for the locking block 331 to a certain extent, thereby providing a good anti-loosening effect for the mounting cap 32.

In some embodiments, the inner surface of the opening 3311 is adhesively connected to the region of the mounting screw 31 corresponding to the stop portion 3141. The inner surface of the opening 3311 is adhesively connected to the region of the mounting screw 31 corresponding to the stop portion 3141, to fix the locking block 331 to the mounting screw 31, which can provide a good anti-loosening effect for the locking block 331 to a certain extent, thereby providing a good anti-loosening effect for the mounting cap 32.

In some embodiments, an adhesive layer can also be coated on the inner surface of the opening 3311, and the locking block 331 is connected in interference fit to the region of the mounting screw 31 corresponding to the stop portion 3141, while the inner surface of the opening 3311 is adhesively connected to the region of the mounting screw 31 corresponding to the stop portion 3141, to improve the connection strength.

Referring to FIG. 6, FIG. 7, and FIG. 12, in some embodiments, one of the locking block 331 and the mounting cap 32 is provided with a recess 3201, and the other of the locking block 331 and the mounting cap 32 is provided with an insertion protrusion 3202 adapted to insert into the recess 3201.

The recess 3201 refers to a groove structure provided on an object. The insertion protrusion 3202 refers to a protruding structure provided on an object.

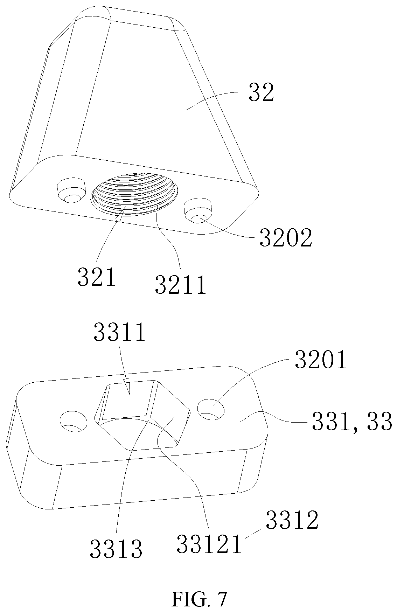

One of the locking block 331 and the mounting cap 32 is provided with the recess 3201, and the other is provided with the insertion protrusion 3202. The recess 3201 and the insertion protrusion 3202 are mated in an insertion manner to achieve the connection between the locking block 331 and the mounting cap 32. As shown in FIG. 6 and FIG. 7, the insertion protrusion 3202 may be provided on the mounting cap 32, and the recess 3201 may be provided on the locking block 331. The locking block 331 is connected to the mounting cap 32 through the cooperation between the insertion protrusion 3202 and the recess 3201. As shown in FIG. 12, the recess 3201 may be provided on the mounting cap 32, and the insertion protrusion 3202 may be provided on the locking block 331. The locking block 331 is connected to the mounting cap 32 through the cooperation between the insertion protrusion 3202 and the recess 3201. In some other embodiments, the recess 3201 and the insertion protrusion 3202 may be both provided on the mounting cap 32, and the insertion protrusion 3202 and the recess 3201 are correspondingly provided on the locking block 331, so that the locking block 331 is connected to the mounting cap 32 through the cooperation between the insertion protrusion 3202 and the recess 3201.

The locking block 331 is connected to the mounting cap 32 through the cooperation between the recess 3201 and the insertion protrusion 3202 in an insertion manner, then rotation of the mounting cap 32 necessarily drives the locking block 331 to rotate, and by restricting rotation of the locking block 331 on the mounting screw 31, rotation of the mounting cap 32 on the mounting screw 31 can be restricted, thereby providing an anti-loosening effect for the mounting cap 32.

In some embodiments, the locking block 331 and the mounting cap 32 may alternatively be adhesively connected.

Referring to FIG. 3 to FIG. 7, in some embodiments, the mounting structure 300 further includes a snap ring 34 provided on the mounting screw 31, the snap ring 34 being configured to restrict the locking block 331 from moving in a direction away from the mounting cap 32.

The snap ring 34 refers to a ring-shaped device configured to connect and fix objects. It is usually made of metal or plastic.

By providing the snap ring 34, an axial position of the locking block 331 along the mounting screw 31 can be restricted by the cooperation between the mounting cap 32 and the snap ring 34, thereby positioning and fixing the locking block 331, so that the locking block 331 can better lock the mounting screw 31 and provide an anti-loosening effect for the mounting cap 32.

In some embodiments, the mounting screw 31 is provided with an annular groove 315, and the snap ring 34 is engaged in the annular groove 315.

The annular groove 315 refers to a groove structure provided on the mounting screw 31, and the groove structure is provided around the circumferential side surface of the mounting screw 31 to form a ring shape.

The annular groove 315 is provided on the mounting screw 31 to facilitate positioning and mounting of the snap ring 34.

In some embodiments, an end of the opening 3311 of the locking block 331 away from the mounting cap 32 is provided with a flared section 3313, and when the locking block 331 abuts against the snap ring 34, the snap ring 34 is accommodated in the flared section 3313.

The flared section 3313 refers to a section where the cross-sectional area is larger than the cross-sectional area of the rest of the opening 3311. The cross-section refers to a section perpendicular to the axial direction of the opening 3311.

The flared section 3313 is provided in the opening 3311 to accommodate the snap ring 34, thereby providing protection for the snap ring 34.

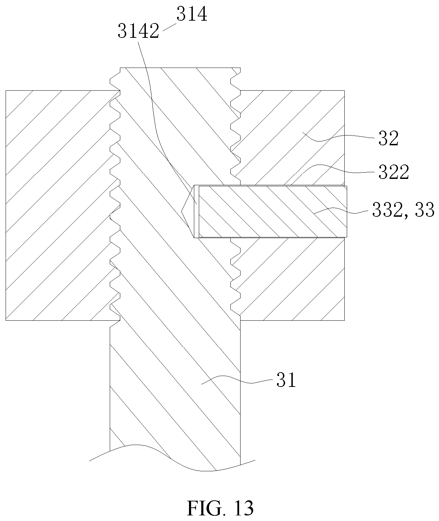

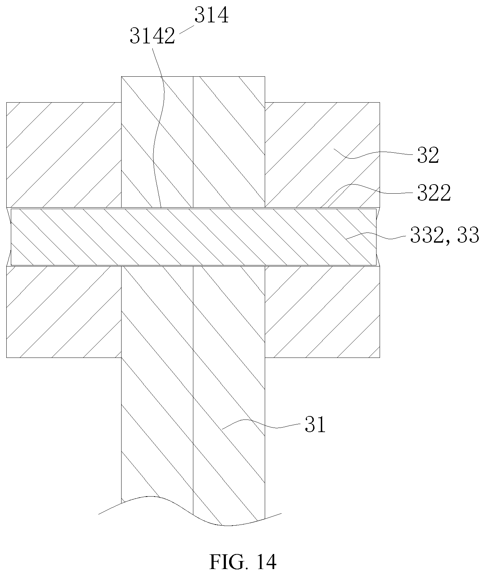

Referring to FIG. 13 and FIG. 14, in some embodiments, a first mounting hole 322 is provided on a side surface of the mounting cap 32, the adaptation structure 314 includes a second mounting hole 3142 provided on a side surface of the first end 311, and the locking member 33 includes a connecting member 332 fittingly mounted in the first mounting hole 322 and the second mounting hole 3142.

The first mounting hole 322 refers to a hole structure provided on the mounting cap 32. The second mounting hole 3142 refers to a hole structure provided on the first end 311 of the mounting screw 31.

The connecting member 332 refers to a structural member adapted to insert into the first mounting hole 322 and the second mounting hole 3142, and the connecting member 332 may be a rod-like member, a block-like member, and the like. Alternatively, the connecting member 332 may be a structural member such as a screw.

By providing the connecting member 332 and mounting the connecting member 332 in the first mounting hole 322 and the second mounting hole 3142, the mounting cap 32 can be fixed to the mounting screw 31, which can both restrict the axial movement of the mounting cap 32 along the mounting screw 31 and restrict rotation of the mounting cap 32 on the mounting screw 31, thereby providing a simple structure and convenient fixation.

In some embodiments, the first mounting hole 322 may extend through the mounting cap 32, and the second mounting hole 3142 may extend through the first end 311 of the mounting screw 31, so that the connecting member 332 can be inserted from either end of the first mounting hole 322, thereby facilitating assembly. Alternatively, the first mounting hole 322 may extend to the connection hole 321, and the second mounting hole 3142 may be a blind hole.

Referring to FIG. 3 to FIG. 5, FIG. 8, and FIG. 9, in some embodiments, the lock sleeve 35 is provided with a slideway 351 configured to guide the mounting screw 31 to rotate by a set angle, and the mounting screw 31 is provided with a guide pin 316, the guide pin 316 extending into the slideway 351.

The slideway 351 refers to a slot or hole structure provided on the lock sleeve 35. The guide pin 316 refers to a rod-like or block-like member protruding from the mounting screw 31. The guide pin 316 may be integrally formed with the mounting screw 31 for manufacturing. Alternatively, the guide pin 316 may be welded to the mounting screw 31.

The guide pin 316 extends into the slideway 351 to guide the movement of the guide pin 316 through the slideway 351, thereby guiding the mounting screw 31 to rotate by a set angle. The set angle may be 60 degrees, 70 degrees, 80 degrees, 90 degrees, 100 degrees, 110 degrees, 120 degrees, and the like, and may be specifically set as needed.

In a case that the tightening screw 36 pulls the mounting screw 31 to move axially along the lock sleeve 35, through the cooperation between the slideway 351 and the guide pin 316, the mounting screw 31 can be guided to rotate by a set angle, thereby driving the mounting cap 32 to rotate by a set angle. During mounting use, the mounting screw 31 is pulled in the direction toward the second end 312 to rotate the mounting cap 32 by the set angle, so that the mounting cap 32 is hooked to the load-bearing medium 90. Conversely, the mounting screw 31 is pushed in the direction toward the first end 311 to reverse the mounting cap 32 by the set angle, separating the mounting cap 32 from the load-bearing medium 90, thereby achieving quick mounting and separation.

In some embodiments, the slideway 351 includes an inclined section 3511. The inclined section 3511 is spirally extended on the lock sleeve 35, or an extension direction of the inclined section 3511 is inclined relative to an axial direction of the lock sleeve 35. The inclined section 3511 is provided to guide the movement of the guide pin 316, thereby driving the mounting screw 31 to rotate by a set angle.

In some embodiments, the slideway 351 further includes a first axial section 3512. The first axial section 3512 extends along the axial direction of the lock sleeve 35. The first axial section 3512 extends from an end of the inclined section 3511 away from the tightening screw 36 in a direction away from the tightening screw 36, so that when the guide pin 316 is in the first axial section 3512, the guide pin 316 guides the mounting screw 31 to move axially.

In some embodiments, the slideway 351 further includes a second axial section 3513. The second axial section 3513 extends along the axial direction of the lock sleeve 35. The second axial section 3513 extends from an end of the inclined section 3511 close to the tightening screw 36 in a direction close to the tightening screw 36, so that when the guide pin 316 is in the second axial section 3513, the guide pin 316 guides the mounting screw 31 to move axially.

During mounting assembly, the guide pin 316 is first positioned at an end of the first axial section 3512 away from the inclined section 3511, so that the mounting cap 32 is away from the lock sleeve 35. In this case, a length direction of the mounting cap 32 is aligned with a length direction of the rectangular hole 91, so that the mounting cap 32 can pass through the rectangular hole 91. Then, the second end 312 of the mounting screw 31 is pulled, the guide pin 316 first moves along the first axial section 3512 to the inclined section 3511, and accordingly, the mounting cap 32 moves toward the load-bearing medium 90. When the guide pin 316 moves along the inclined section 3511 to guide the mounting screw 31 to rotate, the mounting cap 32 is driven to rotate, making the length direction of the mounting cap 32 inclined or perpendicular to the length of the rectangular hole 91; then the guide pin 316 moves along the second axial section 3513, pulling the second end 312 of the mounting screw 31, so that the mounting cap 32 moves toward the load-bearing medium 90 and is hooked onto the load-bearing medium 90, completing the mounting assembly. During disassembly, the second end 312 of the mounting screw 31 is moved in reverse direction, so that the mounting cap 32 moves away from the load-bearing medium 90 in a direction away from the lock sleeve 35 to separate the mounting cap 32 from the load-bearing medium 90, then rotate the mounting cap 32 until the length direction is aligned with the length direction of the rectangular hole 91, and then the mounting cap 32 can be withdrawn from the load-bearing medium 90, completing the disassembly.

In some embodiments, the mounting structure 300 further includes an anti-rotation mechanism 37, where the anti-rotation mechanism 37 includes a sliding sleeve 372 configured to restrict rotation of the tightening screw 36 and a stop member 371 that cooperates to restrict rotation of the sliding sleeve 372, the stop member 371 is fixedly connected to the lock sleeve 35, and the sliding sleeve 372 is slidably sleeved on the tightening screw 36 along the axial direction of the tightening screw 36.

The sliding sleeve 372 refers to a sleeve structure sleeved onto the tightening screw 36 away from the internally threaded section 361.

The stop member 371 refers to a structural member configured to restrict rotation of the sliding sleeve 372. For example, the sliding sleeve 372 may be a ring-like member with external teeth, and the stop member 371 may be a ring-like member with internal teeth. Through the cooperation between the external teeth and the internal teeth, the connection between the stop member 371 and the sliding sleeve 372 is achieved. Alternatively, a groove structure may also be provided on the outer circumference of the sliding sleeve 372, and the stop member 371 may be a protruding tooth structure adapted to insert into the groove structure.

The stop member 371 is fixedly connected to the lock sleeve 35, for example, the stop member 371 can be connected to the lock sleeve 35 by screws, or welded, or the lock sleeve 35 and the stop member 371 may be integrally formed. The sliding sleeve 372 is slidably sleeved on the tightening screw 36, so that the sliding sleeve 372 can be moved, enabling the sliding sleeve 372 to connect with the stop member 371 or separate the sliding sleeve 372 from the stop member 371. When the sliding sleeve 372 is separated from the stop member 371, the tightening screw 36 can be rotated to pull the mounting screw 31 to move; and when the sliding sleeve 372 is in contact connection with the stop member 371, the stop member 371 can prevent rotation of the sliding sleeve 372, thereby preventing rotation of the tightening screw 36 and achieving an anti-rotation effect.

By fixing the stop member 371 on the lock sleeve 35 and sleeving the sliding sleeve 372 on the tightening screw 36, the sliding sleeve 372 is connected to the stop member 371, so that the stop member 371 can restrict rotation of the sliding sleeve 372, thereby restricting rotation of the tightening screw 36. Since the tightening screw 36 is threadedly connected to the second end 312 of the mounting screw 31, rotation of the mounting screw 31 can also be restricted, thereby achieving an anti-rotation effect. When a tool is used to push the sliding sleeve 372 to slide on the tightening screw 36 to separate the sliding sleeve 372 from the stop member 371, the tightening screw 36 can be rotated to drive the mounting screw 31 to rotate and move axially.

In some embodiments, an elastic member 38 configured to elastically push the sliding sleeve 372 in the direction toward the stop member 371 is mounted in the lock sleeve 35.

The elastic member 38 refers to a structural member with elasticity and capable of elastic restoration. The elastic member 38 may be a spring, an elastic piece, an elastic tube, and the like.

The elastic member 38 is provided, and after the tool pushing the sliding sleeve 372 away from the stop member 371 is removed, the elastic member 38 can push the sliding sleeve 372 into contact with the stop member 371 to restrict rotation of the sliding sleeve 372, thereby restricting rotation of the tightening screw 36 to achieve an anti-rotation effect.

According to some embodiments of the present application, the present application provides a mounting structure 300 including a lock sleeve 35, a mounting screw 31, a tightening screw 36, a mounting cap 32, a locking member 33, and a snap ring 34. A cavity 350 is provided in the lock sleeve 35, and the cavity 350 extends through two opposite ends of the lock sleeve 35 along the axial direction of the lock sleeve 35. The mounting screw 31 has opposite first end 311 and second end 312, the second end 312 of the mounting screw 31 is disposed in the cavity 350, and the first end 311 of the mounting screw 31 extends out of the lock sleeve 35; the tightening screw 36 is disposed in the lock sleeve 35, the tightening screw 36 has an internally threaded section 361, and the internally threaded section 361 is threadedly connected to the second end 312 of the mounting screw 31; and the length of the mounting cap 32 is greater than its width. The mounting cap 32 is provided with a connection hole 321 adaptively connected to the first end 311 of the mounting screw 31. The first end 311 includes an externally threaded section 313, the connection hole 321 is provided with an internal thread 3211 threadedly connected to the externally threaded section 313, the locking member 33 includes a locking block 331 connected to the mounting cap 32, the locking block 331 is provided with an opening 3311 for insertion of the first end 311, the first end 311 is provided with a stop portion 3141, an inner surface of the opening 3311 is provided with a mating portion 3312, and the stop portion 3141 is adapted to the mating portion 3312 to restrict the locking block 331 from rotating around the mounting screw 31. The stop portion 3141 is provided at an end of the externally threaded section 313 close to the second end 312, and a radius of the externally threaded section 313 is less than or equal to a minimum distance from the side surface of the stop portion 3141 to the central axis of the mounting screw 31. One of the locking block 331 and the mounting cap 32 is provided with a recess 3201, and the other of the locking block 331 and the mounting cap 32 is provided with an insertion protrusion 3202 adapted to insert into the recess 3201. The mounting screw 31 is provided with an annular groove 315, and the snap ring 34 is engaged in the annular groove 315. An end of the opening 3311 of the locking block 331 away from the mounting cap 32 is provided with a flared section 3313, and when the locking block 331 abuts against the snap ring 34, the snap ring 34 is accommodated in the flared section 3313. In the mounting structure 300 according to the embodiments of the present application, the second end 312 of the mounting screw 31 can be directly configured with a relatively large diameter to improve the structural strength of the second end 312 of the mounting screw 31, and a favorable anti-loosening effect of the mounting cap 32 can also be achieved.

According to some embodiments of the present application, the present application further provides a battery 1001 including the mounting structure 300 as described in any of the above solutions.

According to some embodiments of the present application, the present application further provides an electric device including the mounting structure 300 as described in the above embodiments, or including the battery 1001 as described in the above embodiments.

The electric device may be any device or system that applies the battery 1001 or the mounting structure 300 as described above.

In conclusion, it should be noted that the above embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the foregoing embodiments or make equivalent replacements to some or all technical features thereof. However, these modifications or replacements do not cause the essence of the corresponding technical solutions to depart from the scope of the technical solutions of the embodiments of the present application, and shall all fall within the scope of the claims and specification of the present application. In particular, as long as there is no structural conflict, the various technical features mentioned in the embodiments can be combined in any manner. The present application is not limited to the specific embodiments disclosed in this specification but includes all technical solutions falling within the scope of the claims.

## Claims

1. A mounting structure, **characterized by** comprising:
a lock sleeve, wherein the lock sleeve is provided with a cavity, and the cavity extends through two opposite ends of the lock sleeve along the axial direction of the lock sleeve;
a mounting screw, having a first end and a second end that are opposite to each other, wherein the second end is disposed in the cavity, and the first end extends out of the lock sleeve;
a tightening screw, disposed in the lock sleeve, wherein the tightening screw has an internally threaded section, and the internally threaded section is threadedly connected to the second end;
a mounting cap, wherein the mounting cap is provided with a connection hole adaptively connected to the first end of the mounting screw.

2. The mounting structure according to claim 1, **characterized in that** the mounting structure further comprises a locking member for locking the mounting cap to the first end, and the first end is provided with an adaptation structure that cooperates with the locking member to lock the mounting cap.

3. The mounting structure according to claim 2, **characterized in that** the first end comprises an externally threaded section, the connection hole is provided with an internal thread threadedly connected to the externally threaded section, the locking member comprises a locking block connected to the mounting cap, the locking block is provided with an opening for inserting the first end, the adaptation structure comprises a stop portion provided on a side surface of the first end, an inner surface of the opening is provided with a mating portion, and the stop portion is adapted to the mating portion to restrict rotation of the locking block around the mounting screw.

4. The mounting structure according to claim 3, **characterized in that** the stop portion comprises a first flat surface, and the mating portion comprises a second flat surface adapted to fit with the stop portion;
and/or, the stop portion comprises a first curved surface, the first curved surface is eccentrically arranged with respect to the axial direction of the mounting screw, and the mating portion comprises a second curved surface adapted to fit with the stop portion;
and/or, the stop portion comprises a protrusion, and the mating portion comprises a slot for inserting the protrusion, the slot extending axially along the mounting screw;
and/or, the stop portion comprises a groove arranged to extend axially along the mounting screw, and the mating portion comprises a protruding block adapted to insert into the groove.

5. The mounting structure according to claim 4, **characterized in that** the stop portion is provided at an end of the externally threaded section away from the second end, and a radius of the externally threaded section is greater than or equal to a maximum distance from the side surface of the stop portion to the central axis of the mounting screw.

6. The mounting structure according to claim 4, **characterized in that** the stop portion is provided at an end of the externally threaded section close to the second end, and the radius of the externally threaded section is less than or equal to a minimum distance from the side surface of the stop portion to the central axis of the mounting screw.

7. The mounting structure according to any one of claims 3-6, **characterized in that** the opening is in interference fit with a region of the mounting screw corresponding to the stop portion; and/or, the inner surface of the opening is adhesively connected to the region of the mounting screw corresponding to the stop portion.

8. The mounting structure according to any one of claims 3 to 7, **characterized in that** one of the locking block and the mounting cap is provided with a recess, and the other of the locking block and the mounting cap is provided with an insertion protrusion adapted to insert into the recess.

9. The mounting structure according to any one of claims 3 to 8, **characterized in that** the mounting structure further comprises a snap ring provided on the mounting screw, the snap ring being configured to restrict the locking block from moving in a direction away from the mounting cap.

10. The mounting structure according to claim 9, **characterized in that** the mounting screw is provided with an annular groove, and the snap ring is engaged in the annular groove.

11. The mounting structure according to claim 9 or 10, **characterized in that** an end of the opening away from the mounting cap is provided with a flared section, and when the locking block abuts against the snap ring, the snap ring is accommodated in the flared section.

12. The mounting structure according to any one of claims 2 to 11, **characterized in that** a first mounting hole is provided on a side surface of the mounting cap, the adaptation structure comprises a second mounting hole provided on a side surface of the first end, and the locking member comprises a connecting member fittingly mounted in the first mounting hole and the second mounting hole.

13. The mounting structure according to any one of claims 1 to 12, **characterized in that** the lock sleeve is provided with a slideway configured to guide the mounting screw to rotate by a set angle, and the mounting screw is provided with a guide pin, the guide pin extending into the slideway.

14. The mounting structure according to any one of claims 1 to 13, **characterized in that** the mounting structure further comprises an anti-rotation mechanism, wherein the anti-rotation mechanism comprises a sliding sleeve configured to restrict rotation of the tightening screw and a stop member that cooperates to restrict rotation of the sliding sleeve, the stop member is fixedly connected to the lock sleeve, and the sliding sleeve is slidably sleeved on the tightening screw along the axial direction of the tightening screw.

15. The mounting structure according to claim 14, **characterized in that** an elastic member configured to elastically push the sliding sleeve in the direction toward the stop member is mounted in the lock sleeve.

16. A battery, **characterized by** comprising the mounting structure according to any one of claims 1 to 15.

17. An electric device, **characterized by** comprising the mounting structure according to any one of claims 1 to 15, or comprising the battery according to claim 16.
